# DEMANDE DE BREVET EUROPEEN

(11) **EP 2 610 107 A1**
(43) Date de publication de la demande: **03.07.2013**
(21) Numéro de dépôt: 11382406.4
(22) Date de dépôt: 28.12.2011
(51) Int. Cl.: B60P 3/22, G01N 1/20

(54) **Prélèvement d'échantillon de fluide depuis un camion-citerne de transport d'hydrocarbures**

(71) Demandeur: Total España, S.A., 28042 Madrid (ES)
(72) Inventeur: Rubio, Raul, 28300 Aranjuez Madrid (ES); Cintas Santos, Gerardo Antonio, 28300 Aranjuez (ES)
(74) Mandataire: Radault, Gabrielle

(57) **Abrégé**

Un procédé de prélèvement d'échantillons de fluide stocké dans un camion-citerne de transport d'hydrocarbures (1), comprenant

une étape consistant à recueillir un échantillon (71) de fluide écoulé dans un conduit d'écoulement (18, 17, 20, 22, 23) entre un orifice (50) d'un réservoir de fluide (10) et une sortie de prélèvement ouverte (24).

## Description

L'invention se rapporte au transport d'hydrocarbures, et en particulier aux camions-citernes.

Il est connu d'effectuer des prélèvements d'échantillons à des fins d'analyse, via une ouverture de remplissage située sur le dessus de la citerne du camion-citerne, et au moyen d'un seau.

Il existe un besoin pour des prélèvements d'échantillons de fluide plus simples et plus faciles à mettre en oeuvre.

Il est proposé un procédé de prélèvement d'échantillon de fluide, par exemple un liquide et/ou un gaz, stocké dans un camion-citerne de transport d'hydrocarbures, comprenant une étape consistant à recueillir un échantillon de fluide écoulé dans un conduit d'écoulement entre un orifice d'un réservoir de fluide et une sortie de prélèvement ouverte.

Ce procédé peut permettre un prélèvement plus simple que dans l'art antérieur, dans lequel un opérateur doit grimper au-dessus de la citerne et aller chercher du fluide stocké dans la citerne.

Ce conduit d'écoulement peut être d'une seule pièce ou réalisé par assemblage de plusieurs éléments.

Avantageusement, le fluide s'écoule du fait de la gravité. Il peut par exemple s'agir d'un écoulement gravitaire. Alternativement, l'écoulement peut être favorisé au moyen d'une pompe.

Avantageusement et de façon non limitative, l'orifice du réservoir par lequel le fluide recueilli est passé peut être situé à proximité du point le plus bas du réservoir. Ceci peut permettre de recueillir des éventuels composants non désirables ayant une densité supérieure à celle de l'hydrocarbure transporté, par exemple de l'eau, des sédiments, des précipités, par exemple des asphaltènes. Ces composants lourds indésirables peuvent ainsi être détectés plus facilement que dans l'art antérieur.

L'hydrocarbure transporté peut avoir une densité inférieure à la densité de la phase aqueuse. Cette densité de la phase aqueuse peut être égale à un ou non, notamment si cette phase aqueuse contient des sels.

L'orifice peut par exemple être situé à moins de deux mètres du point le plus bas de la citerne, avantageusement à moins d'un mètre, avantageusement à moins de 50 centimètres, avantageusement au point le plus bas. L'orifice peut être disposé de sorte que la hauteur de fluide entre le point le plus bas et l'orifice soit inférieure ou égale à un mètre, avantageusement inférieure ou égale à 50 centimètres, avantageusement inférieure ou égale à 10 centimètres.

Dans la présente demande les termes « haut », « bas », « supérieur », « inférieur », « vertical », « horizontal », « latéral », « dessus », « dessous » etc. sont définis au sens classique de ces termes, c'est-à-dire que la direction verticale est la direction du vecteur gravité, ce vecteur gravité étant orienté du haut vers le bas, et que le camion-citerne est décrit dans une position normale d'utilisation, sur un sol horizontal.

Avantageusement, le procédé peut comprendre une étape d'ouverture d'un moyen de mise en communication fluide, par exemple une vanne ou un robinet, situé sur le conduit d'écoulement du fluide.

Avantageusement, le procédé peut comprendre une étape d'installation d'un dispositif de prélèvement sur le camion citerne, la sortie de prélèvement étant définie dans ce dispositif.

Ce dispositif peut comprendre une buse de section plus faible que la section de l'orifice du réservoir.

Ce dispositif de prélèvement peut être monté sur une tubulure d'écoulement, de sorte que le conduit d'écoulement comprenne cette tubulure et la buse du dispositif de prélèvement.

La section de la buse peut être plus faible que celle de la tubulure.

Ceci peut permettre d'utiliser des camions-citernes du type connu de l'art antérieur, sans conduit d'écoulement intégré, tout en permettant un prélèvement aisé du fait de la faible section de la sortie de prélèvement.

Il est en outre proposé un dispositif de prélèvement d'échantillons de fluide stocké dans un camion-citerne de transport d'hydrocarbures, ce dispositif étant agencé pour permettre un écoulement de fluide depuis un orifice d'un réservoir de fluide du camion citerne jusqu'à une sortie de prélèvement ouverte, afin que le fluide écoulé soit recueilli en un échantillon.

Avantageusement, le dispositif définit un passage d'écoulement ayant une section comprise entre 0,5 et 25 cm², ces bornes étant incluses. Ce passage peut s'étendre sur toute la longueur du dispositif ou bien correspondre à seulement une portion du trajet d'écoulement du fluide dans le dispositif.

Avantageusement, la sortie de prélèvement a une section comprise entre 0,5 et 25 cm², ces bornes étant incluses.

La section de la sortie de prélèvement peut être plus faible que celle de l'orifice.

Cette section du passage d'écoulement, et en particulier la section d'une buse du dispositif de prélèvement, peut être avantageusement inférieure à 50 cm², avantageusement inférieure à 30 cm², avantageusement inférieure à 20 cm², avantageusement inférieure à 10 cm², par exemple entre 1 et 9 cm², ces bornes étant incluses, avantageusement supérieure à 0,1 cm².

Ceci peut permettre un prélèvement relativement aisé dans la mesure où le flux de fluide écoulé est relativement doux.

Avantageusement, le dispositif peut comporter des moyens de fixation au camion-citerne.

Le dispositif de prélèvement peut par exemple être monté sur le réservoir lorsqu'un prélèvement doit être effectué.

Alternativement, le dispositif de prélèvement peut être intégré au camion-citerne, et en particulier au réservoir.

Avantageusement, les moyens de fixation peuvent comprendre un raccord, par exemple un bouchon, définissant un passage pour l'écoulement du fluide.

Ce raccord peut être fixé directement sur le réservoir, sur une tuyauterie du conduit d'écoulement ayant une section proche de celle du bouchon, sur une tubulure du conduit d'écoulement ayant une section supérieure à celle du bouchon et présentant une surface plane définissant une ouverture de section proche de celle du bouchon, ou autre.

Le bouchon peut être un bouchon fileté, avec par exemple des ergots.

Le bouchon peut par exemple être du type « TW », par exemple conforme à la norme EN 14420-6/DIN28450.

Alternativement le dispositif peut comprendre d'autres types de raccords, notamment un raccord entre deux buses de sections différentes.

Le dispositif de prélèvement peut comporter une buse, notamment dans le prolongement du passage d'écoulement défini dans le bouchon et/ou débouchant sur la sortie de prélèvement ouverte.

Le dispositif de prélèvement peut avantageusement comprendre un moyen de mise en communication fluide, par exemple une vanne ou un robinet, disposé de façon à pouvoir interrompre l'écoulement du fluide. Ce moyen de mise en communication fluide peut par exemple être monté sur la buse.

Le dispositif d'écoulement peut avantageusement définir une sortie coudée, pour une plus grande facilité d'utilisation.

L'invention est maintenant décrite en référence aux figures annexées, non limitatives, dans lesquels :
- la figure 1 illustre un exemple de procédé selon un mode de réalisation de l'invention ;
- la figure 2 est une vue schématique en coupe d'un exemple de dispositif de prélèvement selon un mode de réalisation de l'invention ;
- la figure 3 montre des exemples de dispositifs de prélèvement selon un mode de réalisation de l'invention, et
- la figure 4 montre une partie d'un exemple de dispositif de prélèvement selon un mode de réalisation de l'invention.

Des références identiques peuvent être utilisées pour désigner des éléments identiques ou similaires d'une figure à l'autre.

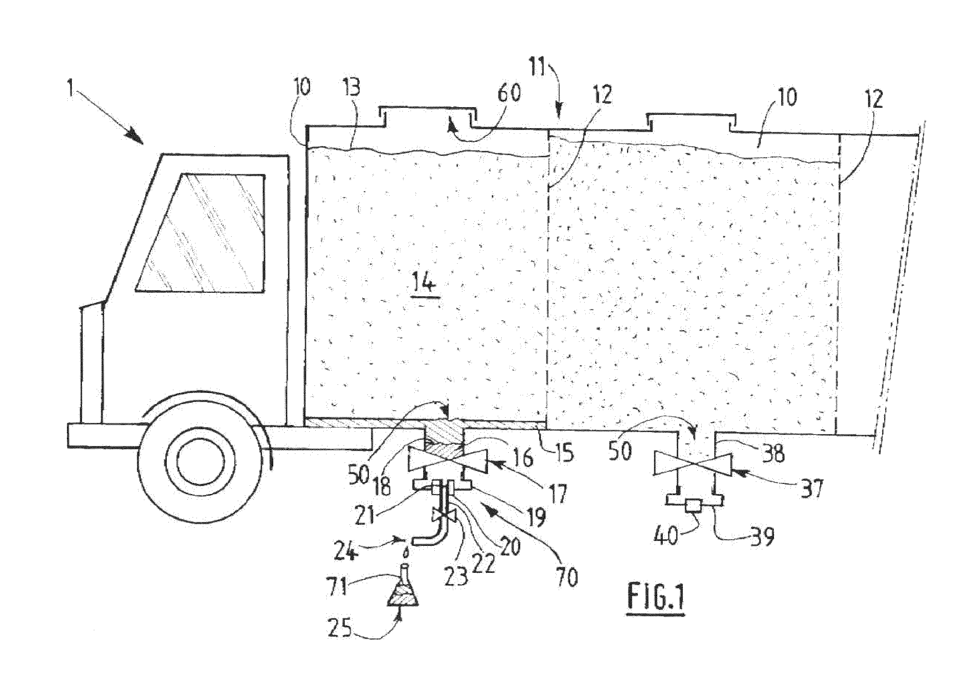

La figure 1 montre schématiquement un camion citerne pour le transport d'hydrocarbures 1, comprenant une citerne 11. Des cloisons internes 12 définissent plusieurs réservoirs 10 dans la citerne 11.

Chaque réservoir peut être rempli de fluide 13 via une ouverture de remplissage 60 correspondante. L'acheteur du contenu du réservoir 10 attend de ce fluide qu'il s'agisse d'hydrocarbures 14, par exemple d'un carburant issu du raffinage, par exemple de l'essence, du fioul, ou autre, ou bien encore du gaz naturel, ou autre.

Néanmoins, ce fluide peut être pollué par des composants indésirables relativement denses, comme l'eau 15 ou des sédiments 16. Ceci est schématiquement représenté sur la figure 1 par trois phases 14, 15, 16. Les dimensions des phases 15, 16 ont été agrandies pour des facilités de lecture.

Aussi des échantillons de fluide 13 sont-ils prélevés lors du remplissage du réservoir et/ou lors de la livraison, et analysés afin de détecter une éventuelle non-conformité de la livraison en camion.

Ce prélèvement est effectué via l'orifice de fond de réservoir 50, conçu pour le vidage du réservoir chez le client, par exemple dans une cuve d'une station-service, au moyen d'une pompe. Cet orifice 50 est situé au point le plus bas du réservoir afin de permettre un vidage total du réservoir.

La citerne 10 comporte une tubulure 38, dite aussi buse de soutirage, par laquelle le fluide s'écoule vers la cuve de station service. Cette tubulure 38, qui définit l'ouverture 50 de la citerne, a une section adaptée au vidage de la cuve, par exemple proche de 200 cm².

La plupart du temps, la vanne 37 est fermée et la tubulure 38 est fermée par un raccord 39 définissant une ouverture obturée par un bouchon 40, comme représenté pour le réservoir de droite.

Lorsque le réservoir doit être vidé, le raccord 39 est retiré, la tubulure 38 est raccordée à un tuyau en communication avec une pompe, puis la vanne 37 est ouverte afin de vider le réservoir.

En revanche, en situation de prélèvement, le raccord 19 est laissé en place, comme représenté pour le réservoir de gauche. On s'assure de ce qu'une vanne 17 est bien fermée. Puis le bouchon (non visible sur la figure) obturant l'ouverture du raccord 19 est retiré, et un dispositif de prélèvement 70 est monté sur le raccord 19 à la place du bouchon 40.

Plus précisément, un bouchon 20, présentant les mêmes filetages que le bouchon 40 est installé. Les bouchons 20, 40 ont des dimensions normalisées.

Ce bouchon 20 définit un passage interne 21 en communication fluide avec une buse 22 d'environ 5 cm² de section.

Puis la vanne 17 est ouverte, et enfin une vanne manuelle 23 montée sur la buse est ouverte le temps de recueillir un échantillon 71 de fluide souhaité dans un flacon 24. Le fluide s'est écoulé via la buse 18, la vanne 17, le bouchon 20, la buse 22, la vanne 23, et une sortie ouverte de prélèvement 24. Ces éléments définissent un conduit d'écoulement. Cet écoulement est gravitaire.

Après fermeture de la vanne 23, on peut emporter l'échantillon 71 à des fins d'analyse. On ferme en outre la vanne 17, puis le dispositif 70 est retiré et on réinstalle à nouveau le bouchon 40 en lieu et place du bouchon 20.

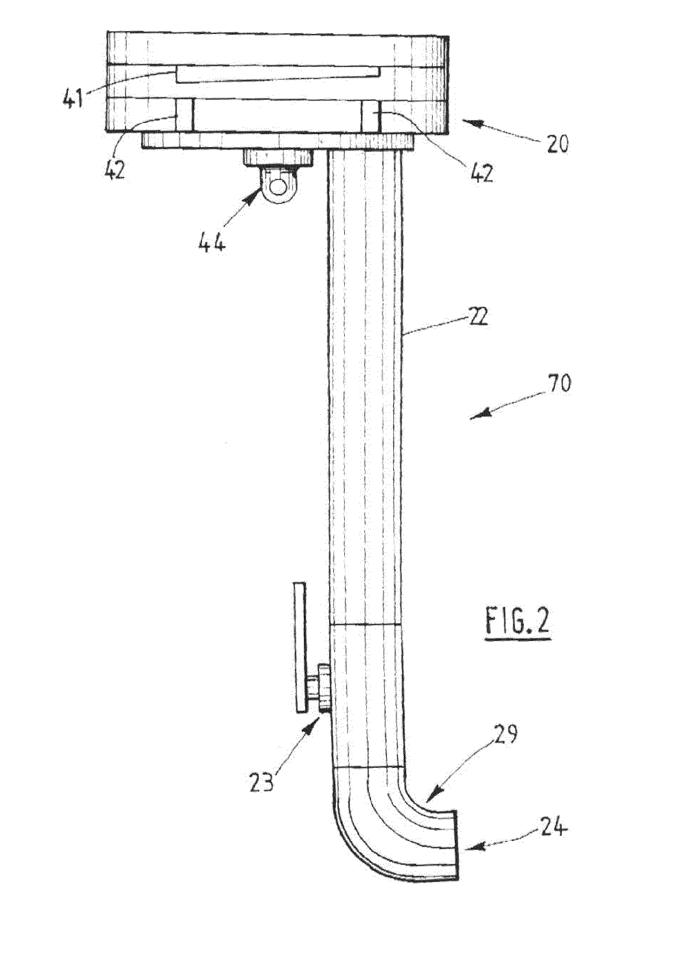

En référence aux figures 2, 3 et 4, le dispositif de prélèvement 70 comprend un bouchon 20 avec un anneau 44 et des ergots 41, 42 permettant de bloquer facilement le bouchon 20 dans un orifice adapté. Il peut s'agir d'un raccord de type mâle-femelle.

Le bouchon 20 a une fermeture Guillemin, de 7,62 cm (3") de diamètre. Les ergots ont une épaisseur de 1,27 centimètres (1/2").

Ce bouchon 20 satisfait la norme EN 14420-6/DIN28450.

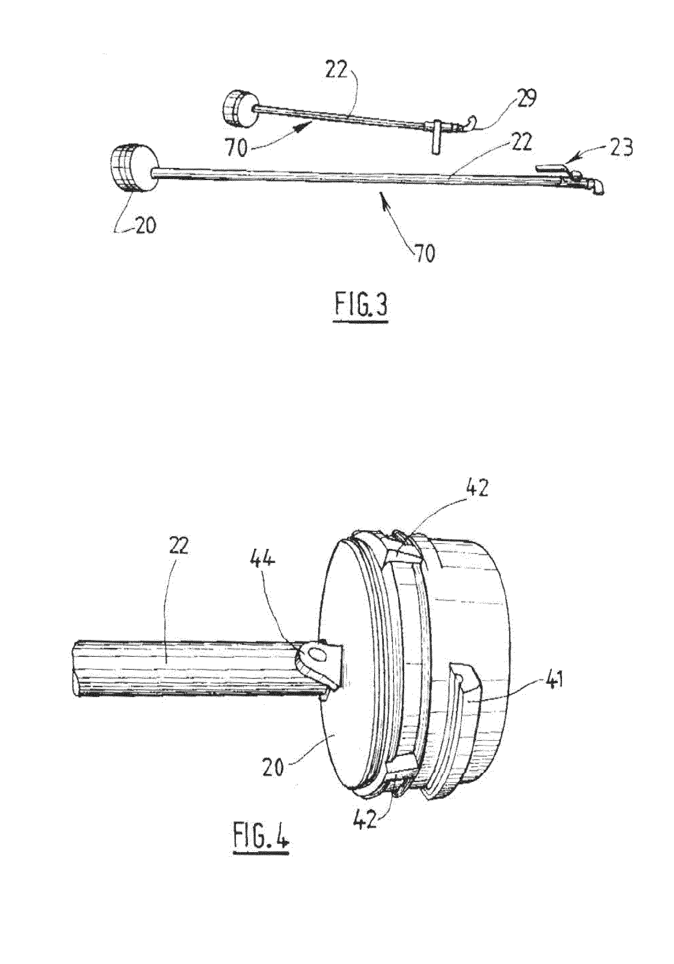

Dans l'exemple représenté sur la figure 4, l'ergot 41 a une section définissant une petite cavité, mais d'autres variantes peuvent tout à fait être envisagées. L'invention n'est en rien limitée à cette forme d'ergot.

Le bouchon 20 définit un passage interne, situé latéralement, dans la continuité d'une buse 22. Cette buse 22, de section circulaire, a un diamètre interne de 1,27 centimètres (1/2").

Une vanne 23 est montée sur cette buse 22. Cette vanne peut être relativement petite et facile à manier, permettant un contrôle aisé de la quantité d'échantillon de fluide prélevé.

La buse 22 se termine en une portion de sortie coudée 29, toujours de diamètre interne de 1,27 centimètres (1/2").

Le dispositif 70 définit ainsi un passage de prés de 5 cm² de section entre le bouchon 20 et la sortie 24.

Le dispositif 70 peut par exemple être réalisé en aluminium, inox, plastique et/ou autre.

Le dispositif est relativement facile à réaliser et de conception relativement simple.

## Revendications

1. Procédé de prélèvement d'échantillons de fluide stocké dans un camion-citerne de transport d'hydrocarbures (1), comprenant
une étape consistant à recueillir un échantillon (71) de fluide écoulé dans un conduit d'écoulement (18, 17, 20, 22, 23) entre un orifice (50) d'un réservoir de fluide (10) et une sortie de prélèvement ouverte (24).

2. Procédé selon la revendication 1, dans lequel l'orifice (50) du réservoir (10) par lequel le fluide recueilli est passé peut être situé à proximité du point le plus bas du réservoir.

3. Procédé selon l'une des revendications 1 à 2, comprenant une étape d'ouverture d'un moyen de mise en communication fluide (17, 23) situé sur le conduit d'écoulement du fluide (18, 17, 20, 22, 23).

4. Procédé selon l'une des revendications 1 à 3, comprenant
une étape d'installation d'un dispositif de prélèvement (70) sur le camion citerne (1), ledit dispositif définissant la sortie de prélèvement (24).

5. Dispositif de prélèvement d'échantillons (70) de fluide stocké dans un camion-citerne de transport d'hydrocarbures (1), ledit dispositif étant agencé pour permettre un écoulement de fluide depuis un orifice (50) d'un réservoir (10) de fluide (13) du camion-citerne jusqu'à une sortie de prélèvement ouverte (24), afin que le fluide écoulé soit recueilli en un échantillon (71).

6. Dispositif selon la revendication 5, dans lequel le dispositif définit un passage d'écoulement de fluide ayant une section comprise entre 0,5 et 25 cm², ces bornes étant incluses.

7. Dispositif selon l'une des revendications 5 à 6, comprenant en outre des moyens de fixation (20) au camion-citerne (1).

8. Dispositif selon la revendication 7, dans lequel les moyens de fixation comprennent un raccord (20) définissant un passage pour l'écoulement du fluide.

9. Dispositif selon l'une des revendications 5 à 8, comprenant une buse de ayant une section comprise entre 1 et 9 cm².

10. Dispositif selon l'une des revendications 5 à 9, comprenant en outre un moyen de mise en communication fluide (22) disposé de façon à pouvoir interrompre l'écoulement du fluide.
